# EUROPÄISCHE PATENTANMELDUNG

(11) **EP 1 074 780 A2**
(43) Veröffentlichungstag der Anmeldung: **07.02.2001**
(21) Anmeldenummer: 00116610.7
(22) Anmeldetag: 01.08.2000
(51) Int. Cl.: F16L 33/28, F16L 23/028

(54) **Anschlussvorrichtung für eine Schlauchleitung an einen Flansch**

(30) Priorität: 05.08.1999 DE 29913243 U
(71) Anmelder: AWG Elastomer- Erzeugnisse Aktiengesellschaft, 38368 Grasleben (DE)
(72) Erfinder: Blank, Andreas, 38118 Braunschweig (DE)
(74) Vertreter: Einsel, Martin, Dipl.-Phys.

(57) **Zusammenfassung**

Eine Anschlussvorrichtung für eine Schlauchleitung an einen Flansch besitzt einen an die Außenkontur des Schlauches der Schlauchleitung angepassten sowie kraft- und/oder formschlüssig mit dem Schlauch verbindbaren Körper. Ferner ist ein mit dem Flansch verbindbares Flanschelement vorgesehen. Dieses Flanschelement zeichnet sich dadurch aus, dass es relativ zum Körper drehbar ist.

## Beschreibung

Die Erfindung betrifft eine Anschlussvorrichtung für eine Schlauchleitung an einen Flansch.

Schlauchleitungen und Schläuche werden in vielen technischen Prozessen zum Fördern von Flüssigkeiten, Stäuben, Suspensionen und Feststoffen eingesetzt. Als Beispiel seien das Fördern von Säuren und Laugen in Produktionsanlagen der chemischen Industrie, das Be- und Entladen von Tanklastwagen oder Tankschiffen, das Fördern von Kies als Suspension in Wasser bei der Kiesgewinnung und Aufbereitung, das Absaugen von Stäuben aus Mineralmahlanlagen und das Verladen von körnigen und pulvrigen Materialien in Schiffen oder Lastwagen genannt.

Im Gegensatz zu Rohrleitungen besitzen Schlauchleitungen den Vorteil, auch ortsveränderliche oder in einem gewissen Rahmen bewegliche Maschinen, Apparate oder Fahrzeuge miteinander verbinden zu können. Bei Schiffen, die im Hafen liegen und be- oder entladen werden sollen, sich dabei aber in gewissem Rahmen abhängig von der Tide und von Wellenbewegungen des Hafenwassers bewegen, sind ein unmittelbar einleuchtendes Beispiel. Die Wasserzu- und Schlammabführung bei Tiefbohrungen, deren Tiefe während ihres Betriebes stetig weiter fortschreitet, sind ein weiteres Beispiel.

Eine Schlauchleitung besteht aus dem eigentlichen Schlauch, der die Förderaufgabe erfüllt und den Anschlussvorrichtungen, die die Aufgabe haben, den Schlauch an den oder einen der ortsveränderlichen Apparateteile anzuschließen. Diese Anschlussvorrichtungen oder Anschlussteile oder Anschlussstücke werden auch als Fittinge bezeichnet.

Für derartige Fittinge gibt es verschiedene Ausführungsformen. Sie müssen insbesondere zwei Forderungen erfüllen. Zum einen müssen sie den Anschluss an ein vorgegebenes und im Regelfall nicht beeinflussbares Endstück am ortsveränderlichen Apparateteil ermöglichen. Zum anderen müssen sie an dem Schlauch festsitzen und die durch das Hindurchströmen der Flüssigkeit auf den Schlauch ausgeübten Kräfte aufnehmen können.

Die Gegenstücke an den ortsveränderlichen Apparateteilen sind im allgemeinen Flansche. Flanschanschlüsse sind deshalb weit verbreitet, weil sie einerseits geformt sind und andererseits bereits in sich selbst die Funktionen 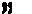 abdichten" und 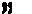 feste mechanische Verbindung" vereinen.

Um an einem solchen Flansch befestigt werden zu können, muss der Fitting bzw. die Anschlussvorrichtung ein entsprechendes Flanschelement besitzen. Dieses Flanschelement des Fittings und der Flanschanschluss an dem ortsveränderlichen Apparateteil besitzen dann gleich geteilte Lochkreise mit miteinander fluchtenden Bohrungen und können durch in diese fluchtenden Bohrungen gesteckte Stifte mit Muttern und/oder Schrauben festgezogen werden.

Für Fittinge oder Anschlussvorrichtungen mit derartigen Flanschelementen gibt es im wesentlichen drei bekannte Konzeptionen.

Die eine sieht vor, dass das Flanschelement einstückig mit dem Schlauch hergestellt wird. Dies ist zwar für die Stabilität und Zuverlässigkeit der Verbindung sehr vorteilhaft und erübrigt die Frage der Befestigung des Flanschelementes an dem Schlauch. Nachteilig ist jedoch die von vornherein festgelegte Gesamtlänge der Schlauchleitung und der Umstand, dass im Falle eines beliebigen Defektes an dem Schlauch der gesamte Schlauch unbrauchbar wird und samt den meist sehr kostspielig angeformten Flanschelementen entsorgt werden muss.

Eine zweite Möglichkeit sieht einen Aufbau aus zwei Halbschalen vor, die in ihrem Innenbereich eine Profilierung aufweisen. Diese Profilierung ist die Negativform von speziellen, für diese Halbschalen angefertigten Gummischläuchen. Die Halbschalen werden auf den Gummischläuchen aufgesetzt und mit Schrauben verbunden. Die Halbschalen selbst sind mit jeweils halben Flanschelementen fest oder einstückig verbunden, die nach dem Aufklemmen der Halbschalen von zwei Seiten auf den Schlauch insgesamt das erforderliche Flanschelement ergeben, mit dem dann die Schlauchleitung an den ortsveränderlichen Apparat mit seinem Flansch angesetzt werden kann.

Die dritte Möglichkeit schließlich geht ebenfalls von zwei Halbschalen mit daran einstückig oder ähnlich befestigten halben Flanschstücken aus. Sie unterscheidet sich von der zweiten Bauform dadurch, dass glatte Schläuche ohne Profilierung verbunden werden. In diesem Fall wird die Kraftschlüssigkeit der Verbindung zwischen den aufgeklemmten Halbschalen und dem Schlauch durch eine in die Halbschalen eingelegte Metallplatte mit einer reibeisenähnlichen Profilierung gewährleistet.

Auch die zweite und die dritte bekannte Bauform besitzen eklatante Nachteile. Das Gewicht der Fittinge bzw. Anschlussvorrichtungen ist enorm und im Regelfall werden mindestens zwei Personen benötigt, um ein solches Anschlussstück vor Ort auf den Schlauch aufzumontieren.

In ähnlicher Form schlägt die EP 0 004 673 A2 eine Schlaucharmatur mit einem Stutzen vor, der an seinem einen Ende einen Verbindungsflansch zum Zusammenwirken mit einem Befestigungselement aufweist. Der Stutzen weist einen Einsatz in Form einer Metallhülse auf, die in den inneren Bereich des Schlauches eingeschoben wird und dort mit dem zu fördernden Medium in Berührung kommt. Sie ist gegenüber dem Medium durch eine Ummantelung abgeschirmt und nach außen metallisch leitend, um elektrostatische Aufladungen zu vermeiden. Problematisch ist die Verengung des Innenraums des Schlauchdurchmessers und ein erheblicher konstruktiver Aufbau aus diversen ineinander greifenden Teilen, die auch kompliziert zu montieren sind.

Darüber hinaus ist zu berücksichtigen, dass die für derartige gewerbliche Zwecke verwendeten Schläuche hochanspruchsvolle und durch Spiraldraht verstärkte Elemente sind. Diese dürfen nicht in sich verdreht werden. Im Regelfall besitzen derartige Schläuche eine Verdrehtoleranz von weniger als 3°.

Das bedeutet aber, dass eine Anschlussvorrichtung mit einem Flanschelement und einem darin befindlichen Lochkreis sehr häufig nicht auf den Lochkreis des Flansches am Gegenstück an dem ortsveränderlichen Apparateteil passt. Diese Lochkreise weisen im Regelfall nämlich Teilungen von 15° oder 30° auf. Aufgrund der geringen Toleranz von 3° kann also nicht durch leichte Drehungen der Schlauchleitung insgesamt ein Ausgleich geschaffen werden.

Da der Einsatz dieser Schlauchleitungen häufig unter ungünstigen und schlecht vorherberechenbaren äußeren Bedingungen stattfindet, ist eine vorherige Planung kaum möglich. Es muss dann vor Ort durch entsprechendes exaktes Ausmessen oder Ausprobieren versucht werden, die entstandene Fehllage der beiden Lochkreise der beiderseitigen Flansche zueinander auszugleichen. Dazu muss das erforderliche Verdrehungsmaß für die Flansche auf den Schlauch übertragen werden, die Anschlussvorrichtung wieder gelöst und entsprechend verdreht wieder neu montiert werden.

Bei Schläuchen mit einer schraubenförmig um den Schlauch herumlaufenden Außenprofilierung kommt als weitere Erschwernis hinzu, dass eine Verdrehung des Flansches gleichzeitig zu einer entsprechenden erforderlichen Verkürzung des Schlauches führt. Unter bestimmten Umständen kann dies dazu führen, dass die gesamte Schlauchleitung insgesamt unbrauchbar wird.

Aufgabe der vorliegenden Erfindung ist es demgegenüber, eine Anschlussvorrichtung für Schlauchleitungen vorzuschlagen, die eine vereinfachte Montage von derartigen Schläuchen an Flanschen ermöglicht.

Diese Aufgabe wird dadurch gelöst, dass das Flanschelement der Anschlussvorrichtung relativ zum Körper drehbar ist.

Durch eine derartige Konzeption ist überraschend die Aufgabe lösbar und zugleich eine sehr vorteilhafte und praktikable, vielseitig einsetzbare Konzeption geschaffen.

Der Körper bleibt weiterhin kraft- und/oder formschlüssig mit dem Schlauch verbindbar und hält damit die gesamte Anschlussvorrichtung. Das Flanschelement dagegen wird jetzt frei drehbar. Es wird dadurch möglich, das Flanschelement genau exakt auf den Gegenflansch auszurichten, ohne auf die momentane Lage des Schlauches und die eingeschränkte Verdrehbarkeit des Schlauches Rücksicht nehmen zu müssen.

Anders als bisher wird also eine Trennung der beiden angestrebten Funktionen in zwei Bauteile vorgenommen. Das Festhalten am Schlauch geschieht durch den Körper, die Montage am Flansch durch den Flansch. Diese beiden Bauteile aber müssen ihrerseits nicht fest miteinander verbunden sein, welche Erkenntnis im Stand der Technik noch nicht vorliegt.

Um ein Herabrutschen des Flanschelements von dem Körper und damit vom Schlauch zu verhindern, ist es bevorzugt, wenn der Körper hülsenartig ausgebildet ist und auf seiner nach der Montage dem Ende des Schlauches zugewandten Seite eine radial nach außen gerichtete Nase aufweist. Eine solche Nase kann in vielerlei Form vorgesehen werden. Besonders bevorzugt ist es dabei, wenn die Nase über im wesentlichen dem gesamten Umfang umläuft.

Das Flanschelement ruht also auf dem Körper, ist relativ zu diesem und um dieses drehbar und wird durch die kragenähnliche umlaufende Nase am Herabrutschen gehindert. Ein Herabrutschen in die andere Richtung ist unkritisch, da das Flanschelement ja nach der Montage durch die Befestigung am Gegenflansch ohnehin gehalten wird und es durchaus von Vorteil ist, wenn es bis zu diesem Zeitpunkt auch in Achsrichtung relativ zum Schlauch bewegbar ist.

Die Erfindung ist natürlich auch geeignet, um zwei Schlauchenden miteinander zu verbinden. Beide Schläuche werden dann jeweils mit einer derartigen Anschlussvorrichtung versehen und dann die Flanschelemente der beiden gegenüberliegenden Schlauchenden in genau der beschriebenen Form miteinander verbunden.

Bevorzugt ist es ferner, wenn die Nase nicht nur nach außen gerichtet ist, um das Flanschelement am Herabrutschen zu hindern, sondern wenn sie sich auch radial nach innen erstreckt. Das erleichtert die Montage des Körpers auf dem Schlauch und fixiert zugleich die Position. Es kann nämlich das Ende des Schlauches gegen diese nach innen gerichteten Bereiche der Nase anstoßen und so eine präzise Justage erfolgen.

Das Flanschelement selbst ist bevorzugt aus Metall, um die Haltbarkeit zu erhöhen. Darüber hinaus werden das Flanschelement einerseits und/oder der Körper andererseits bevorzugt einstückig ausgeführt. Im Stand der Technik waren ja jeweils zwei Halbschalen eingesetzt worden, die jeweils Teile der Funktionen der nunmehrigen Bauteile übernahmen. Der einstückige Körper kann jetzt wesentlich leichter ausgebildet werden, da er kein Gussteil mehr sein muss, sondern aus Blech hergestellt werden kann.

Für die Erzielung der kraft- und/oder formschlüssigen Verbindung mit dem Schlauch ist es bevorzugt, Klemmelemente radial um den Körper herumzulegen. Bevorzugte Einzelheiten hierzu und zu einigen weiteren bevorzugten Merkmalen sind in den Unteransprüchen angegeben.

Im folgenden wird anhand der Zeichnung ein Ausführungsbeispiel der Erfindung näher erläutert. Es zeigen:
- **Figur 1**: eine perspektivische Darstellung eines erfindungsgemäßen Anschlussstückes mit einem Abschnitt eines Schlauches; und

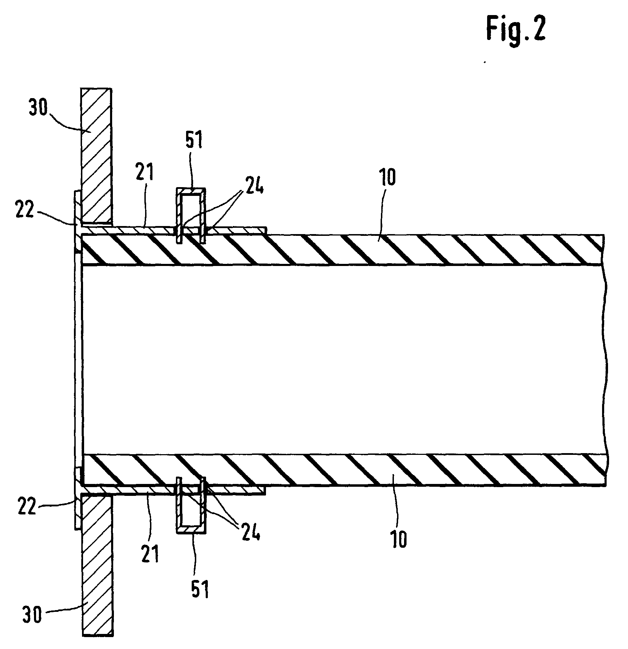

- **Figur 2**: einen Schnitt durch die Figur 1 parallel zur Längsachse des Schlauches.

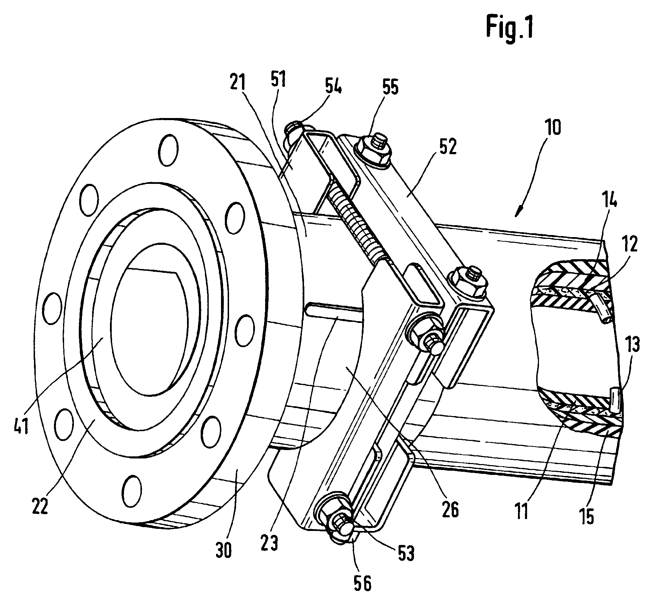

Ein Schlauch 10 besitzt einen im wesentlichen kreisförmigen Querschnitt, wie in **Figur 1** gut zu erkennen ist. Ein Teil des Schlauches 10 ist weggebrochen dargestellt, um den Aufbau des Schlauches 10 aus mehreren Schichten besser erkennen zu können. Durch den Schlauch soll (nicht dargestelltes) Fördergut transportiert werden. Zu diesem Zweck besitzt er einen hohlen inneren zylindrischen Raum. Der hohle innere zylindrische Raum für das Fördergut wird begrenzt von einer Schlauchseele 11. Nur diese Schlauchseele 11 kommt mit dem Fördergut in Verbindung. Sie besteht aus insbesondere Gummi, das dem jeweiligen Fördergut und seinen abrasiven Neigungen besonders gut widerstehen kann.

Um die Schlauchseele 11 verläuft eine Zwischenlage 12 mit textiler Verstärkung. Die Zwischenlage 12 ist außerdem von einem spiralförmig den gesamten Schlauch 10 durchlaufenden Verstärkungsdraht 13 durchsetzt. In der Figur 1 ist von dem Verstärkungsdraht 13 lediglich ein sehr kurzer Bereich zu erkennen, nämlich je zwei kleine Drahtenden, die aus der Zwischenlage 12 in den teilweise weggebrochen dargestellten Bereich hervortreten. Natürlich ist der Verstärkungsdraht in Wirklichkeit nicht unterbrochen.

Die Zwischenlage 12 mit dem Verstärkungsdraht 13 wird von einer weiteren Zwischenlage 14 umgeben, diese nach außen von einer Schlauchdecke 15. Die Schlauchdecke 15 ist zugleich die Außenhaut des Schlauches 10 und ist so ausgebildet, dass sie von außen auftretenden Kräften und Anforderungen besonders gut widerstehen kann.

Der Verstärkungsdraht 13 dient insbesondere dazu, die Druckfestigkeit und Biegefähigkeit des Schlauches 10 zu verbessern und zu gewährleisten.

Der Schlauch setzt sich in der Figur 1 nach rechts natürlich über eine erhebliche Strecke fort.

Links außerhalb des Bildausschnittes befindet sich ein nicht dargestelltes ortsveränderliches Apparateteil mit einem Flansch, der einen Lochkreis mit acht Löchern aufweist, die also jeweils in einem Winkelabstand von 45° zueinander stehen. Der Schlauch 10 selbst kann zwar entsprechend seiner Länge gebogen und bewegt werden, er sollte jedoch in sich um maximal 3° verdreht werden, um die Stabilität des Verstärkungsdrahtes 13 nicht zu gefährden.

Der Schlauch 10 soll nun mit diesem nicht dargestellten Flansch verbunden werden, damit das Fördergut in den Apparateteil eintreten oder aus diesem in den Schlauch 10 gelangen kann.

Hierzu ist der Schlauch benachbart zu seinem Ende mit einer Anschlussvorrichtung 20 versehen, einem Anschlussstück oder einem Fitting. Die Anschlussvorrichtung 20 weist einen Hülsenkörper 21 auf. Der Hülsenkörper 21 ist im wesentlichen zylindrisch und besitzt einen Innendurchmesser, der ungefähr dem Außendurchmesser der Schlauchdecke 15 des Schlauches 10 entspricht und auf den Schlauch 10 gerade soeben mit geringfügigem Spiel aufschiebbar ist. Dieser Hülsenkörper 21 besitzt in axialer Richtung eine Länge, die größenordnungsmäßig seinem Durchmesser entspricht. Er besteht aus Blech.

An einem axialen Ende, das nach der Aufbringung mit dem Ende des Schlauches 10 übereinstimmt, ist der Hülsenkörper 21 mit einer umlaufenden Nase 22 versehen. Die umlaufende Nase 22 ragt von dem Durchmesser des Hülsenkörpers 21 radial sowohl nach innen in Richtung zum Mittelpunkt des Schlauches 10 als auch radial nach außen. Diese Nase 22 ist ein ebener flacher Stahlring und mit dem Hülsenkörper 21 fest verbunden.

Die Erstreckung der Nase 22 vom Innendurchmesser des Hülsenkörpers 21 nach innen lässt einen Innendurchmesser der Nase 22 frei, der größer ist als der Innendurchmesser der Schlauchseele 11 des Schlauches 10.

Die Erstreckung der Nase 22 nach außen besitzt in etwa die gleiche Größenordnung, ist aber so groß, dass der Innendurchmesser des Lochkreises des Flansches nicht erreicht wird.

Die Nase 22 kann auch eine Profilierung aufweisen oder zusätzliche Ausformungen aufweisen, um Dicht- oder Zentrierfunktionen zu übernehmen.

Der Hülsenkörper 21 besitzt außerdem Längsschlitze 23, die sich achsparallel von dem der Nase 22 abgewandten Ende des Hülsenkörpers etwa über die Hälfte bis zwei Drittel der axialen Längserstreckung des Hülsenkörpers 21 erstrecken. Diese Längsschlitze 23 ermöglichen in gewissem Umfang ein Zusammendrücken des Hülsenkörpers 21 auf der der Nase 22 abgewandten Seite. Zwischen je zwei Längsschlitzen 23 bildet sich so jeweils eine Zunge 26 als Bestandteil des Hülsenkörpers 21.

Außerdem besitzt der Hülsenkörper 21 einige radiale Schlitze 24, die in der in der Figur 1 nicht zu erkennen sind, aber benachbart zum Ende der Seite angeordnet sind, die der Nase 22 des Hülsenkörpers 21 gegenüberliegt. Diese radialen Schlitze 24 sind nicht durchgehend, sondern jeweils nur über bestimmte Winkelbereiche vorgesehen.

Ohne eine feste körperliche Verbindung und als separates Bauelement ist ein Flanschelement 30 vorgesehen. Das Flanschelement 30 ist ein zylindrisches und insbesondere metallisches Bauelement mit einem Innendurchmesser, der geringfügig größer als der Außendurchmesser des Hülsenkörpers 21 ist und sich um diesen gut drehen kann. Sein Außendurchmesser ist so groß, dass sich zwischen Innen- und Außendurchmesser des Flanschelementes 30 gut ein Lochkreis 31 anordnen lässt, der exakt zum Lochkreis des nicht dargestellten Flansches des ortsveränderlichen Apparateteils passt. In dem dargestellten Ausführungsbeispiel handelt es sich um einen Lochkreis mit acht Löchern, also jeweils in einem Winkelabstand von 45°. Die Bohrungen des Lochkreises des Flanschelementes 30 und die des Flansches am ortsveränderlichen Apparateteil können so in Übereinstimmung gebracht werden, dass sie alle gleichzeitig miteinander fluchten.

Zur Montage der Anschlussvorrichtung auf dem Ende des Schlauches 10 wird zunächst das Flanschelement 30 vom Ende des Schlauches 10 her auf diesen um die Schlauchdecke 15 geschoben, beispielsweise bis zu dem in der Figur 1 dargestellten rechten Bereich.

Anschließend wird der Hülsenkörper 21 von dem gleichen Ende des Schlauches 10 her aufgeschoben, und zwar mit dem der Nase 22 gegenüberliegenden Ende voran. Da der Durchmesser des Hülsenkörpers 21 wie erörtert geringfügig größer als der Außendurchmesser der Schlauchdecke 15 ist, passt dies exakt. Der Schlauch 10 wird soweit in den Hülsenkörper 21 hineingeschoben wie möglich. Das Hineinschieben wird begrenzt dadurch, dass der Schlauch 10 mit seinem vordersten Ende an die Innenseite der Nase 22 bzw. deren nach innen gerichtete Seite anstößt.

Dadurch bildet sich automatisch begrenzt durch das Vorderende der Schlauchwandung mit Schlauchseele 11, Zwischenlage 12 und Zwischenlage 14 einerseits und die Innenseite der Nase 22 andererseits ein konzentrischer und zylindrischer Raum 41, der für das Einlegen einer Dichtung genutzt werden kann.

Nach dem Aufschieben des Hülsenkörpers 21 auf das Ende des Schlauches 10 wird jetzt noch der Hülsenkörper 21 auf dem Ende des Schlauches 10 festgelegt, denn zu diesem Zeitpunkt ist er ja noch frei beweglich und könnte wieder abgezogen werden. Zu diesem Zweck wird zunächst das Flanschelement 30 wieder in Richtung Ende des Schlauches 10 geschoben. Es stößt dann jetzt von innen gegen die Nase 22, und zwar gegen deren in Richtung nach außen gerichteten Teil. Das Flanschelement 30 ist unverändert frei drehbar und seine exakte Lage und Orientierung in diesem Moment beliebig und unerheblich.

Es werden jetzt zwei Klemmelemente 51 und 52 von außen um den Hülsenkörper 21 auf der Schlauchdecke 15 des Schlauches 10 gelegt. Diese Klemmelemente 51 und 52 sind jeweils um 90° zueinander versetzt. Es handelt sich hier um Klemmbrücken. Diese werden mittels Spannschrauben 53, 54, 55 und 56 angezogen. Dadurch spannen sie den Hülsenkörper 21 und insbesondere die Zungen 26 zwischen den Schlitzen 23 in Richtung auf die Schlauchdecke 15 des Schlauches 10. Sie drücken die äußersten Enden dieser Zungen 26 in das Material der Schlauchdecke 15 hinein und verhindern dadurch jedwede weitere Bewegung des Hülsenkörpers 21.

Die Klemmelemente 51, 52 bzw. deren Innenseiten haben eine an den Hülsenkörper 21 bzw. dessen Außenseite angepasste Kontur.

Außerdem sind die Klemmelemente 51 und 52 auf ihrer Innenseite mit nicht dargestellten Vorsprüngen bzw. Laschen versehen, die beim Anziehen der Spannschrauben 53, 54, 55, 56 genau in die radialen äußeren Schlitze 24 des Hülsenkörpers 21 eindringen, diese durchdringen und in die Schlauchdecke 15 gelangen. Auf der der Schlauchdecke 15 zugewandten Seite können sie zusätzlich ein Sägezahnprofil aufweisen. Dadurch wird jede weitere Bewegung des Hülsenkörpers 21 auf den Schlauch 10 zusätzlich unterbunden und der Hülsenkörper 21 fixiert.

Es sitzt damit der Hülsenkörper 21 fest und unverlierbar auf dem Schlauch 10. Das Flanschelement 30 ist unverlierbar zwischen der Nase 22 und den Klemmelementen 51 und 52, kann sich aber unverändert frei drehen und hat auch in gewissem Rahmen axiales Spiel.

Alle diese Vorbereitungen können in der Werkstatt vorgenommen werden, also nicht erst vor Ort. Es ist also möglich, eine Schlauchleitung mit dieser kompletten Anschlussvorrichtung vorzumontieren und dann vor Ort auszulegen. Das Ende des Schlauches 10 wird dann in ungefähre Übereinstimmung mit dem Flansch des Gegenstückes an dem ortsveränderlichen Apparateteil gebracht. Es wird nun der Lochkreis des frei drehbaren Flanschelementes 30 in exakte Übereinstimmung mit dem Lochkreis des festen Flansches gebracht, was durch die freie Drehbarkeit ohne weiteres möglich ist, ohne die geringste mechanische Beanspruchung des Verstärkungsdrahtes 13 in dem Schlauch 10. Jetzt kann durch Schrauben und Muttern oder eine andere geeignete Verbindung eine feste Verbindung zwischen dem Flansch einerseits und dem Flanschelement 30 andererseits hergestellt werden. Dadurch wird zugleich auch die Nase 22 und der entstandene Raum 41 für die Dichtung an den Gegenflansch gezogen und es entsteht so eine dichte Verbindung für das zu fördernde Gut durch den Schlauch 10 in den ortsveränderlichen Apparateteil und umgekehrt.

Die Anschlussvorrichtung ist im wesentlichen aus Blechteilen aufgebaut und dadurch sehr leicht und platzsparend, anders als bei gegossenen Formstücken.

Bei Tests konnten Drücke von 16 bar problemlos dicht gehalten werden. Die Anschlussvorrichtung ist einfach zu montieren, kostengünstig herzustellen, zuverlässig im Betrieb und praktisch wartungsfrei.

### Bezugszeichenenliste

- 10: Schlauch
- 11: Schlauchseele
- 12: Zwischenlage
- 13: Verstärkungsdraht
- 14: Zwischenlage
- 15: Schlauchdecke
- 20: Anschlussvorrichtung
- 21: Hülsenkörper
- 22: Nase
- 23: Schlitz
- 24: Schlitz
- 26: Zunge
- 30: Flanschelement
- 41: Raum für Dichtung
- 51: Klemmelement
- 52: Klemmelement
- 53: Spannschraube
- 54: Spannschraube
- 55: Spannschraube
- 56: Spannschraube

## Patentansprüche

1. Anschlussvorrichtung für eine Schlauchleitung an einen Flansch, mit einem an die Außenkontur des Schlauches (10) der Schlauchleitung angepassten sowie kraft- und/oder formschlüssig mit dem Schlauch (10) verbindbaren Körper (21) und mit einem mit dem Flansch verbindbaren Flanschelement (30),
**dadurch gekennzeichnet,**
**dass** das Flanschelement (30) relativ zum Körper (21) drehbar ist.

2. Anschlussvorrichtung nach Anspruch 1,
**dadurch gekennzeichnet,**
**dass** der Körper (21) hülsenartig ausgebildet ist und auf seiner nach der Montage dem Ende des Schlauches (10) zugewandten Seite eine radial nach außen gerichtete Nase (22) aufweist.

3. Anschlussvorrichtung nach Anspruch 2,
**dadurch gekennzeichnet,**
**dass** die Nase (22) über im wesentlichen den gesamten Umfang umläuft

4. Anschlussvorrichtung nach einem der vorstehenden Ansprüche,
**dadurch gekennzeichnet,**
**dass** der Körper (21) einstückig ist und den Umfang des Schlauches (10) umfasst.

5. Anschlussvorrichtung nach einem der vorstehenden Ansprüche,
**dadurch gekennzeichnet,**
**dass** das Flanschelement (30) aus Metall besteht.

6. Anschlussvorrichtung nach einem der vorstehenden Ansprüche,
**dadurch gekennzeichnet,**
**dass** ein oder mehrere Klemmelemente (51, 52) vorgesehen sind, die den Körper (21) kraft- und/oder formschlüssig mit dem Schlauch (10) verbinden.

7. Anschlussvorrichtung nach Anspruch 6,
**dadurch gekennzeichnet,**
**dass** der Körper (21) Längsschlitze (23) aufweist, die zwischen sich Zungen (26) bilden, und dass bei Betätigung der Klemmelemente (51, 52) die Zungen (26) gegen den Schlauch (10) gepresst werden.

8. Anschlussvorrichtung nach Anspruch 6 oder 7,
**dadurch gekennzeichnet,**
**dass** der Körper (21) mit radialen Schlitzen (24) versehen ist, die über Teile des Umfangs umlaufen, und dass die Klemmelemente (51, 52) auf ihrer Innenseite mit Vorsprüngen versehen sind, die beim Betätigen der Klemmelemente (51, 52) durch die radialen Schlitze (24) in den Schlauch (10) eingreifen.

9. Anschlussvorrichtung nach Anspruch 8,
**dadurch gekennzeichnet,**
**dass** die Vorsprünge als Laschen oder Stege ausgebildet sind und ein gezahntes Profil aufweisen.

10. Anschlussvorrichtung nach einem der Ansprüche 6 bis 9,
**dadurch gekennzeichnet,**
**dass** die Klemmelemente (51, 52) als Klemmbrücken ausgebildet sind und mittels Spannschrauben (53, 54, 55, 56) angespannt werden.

11. Anschlussvorrichtung nach einem der vorstehenden Ansprüche,
**dadurch gekennzeichnet,**
**dass** die Nase (22) auch radial vom Ende des hülsenartigen Körpers (21) nach innen gerichtet ist.

12. Anschlussvorrichtung nach Anspruch 11,
**dadurch gekennzeichnet,**
**dass** auch der nach innen gerichtete Teil der Nase (22) über im wesentlichen den gesamten Umfang umläuft.

13. Anschlussvorrichtung nach Anspruch 12,
**dadurch gekennzeichnet,**
**dass** die Nase (22) radial weniger tief erstreckt ist als die Dicke des Schlauches (10) beträgt.
